# EUROPÄISCHE PATENTANMELDUNG

(11) **EP 2 266 848 A2**
(43) Veröffentlichungstag der Anmeldung: **29.12.2010**
(21) Anmeldenummer: 10167450.5
(22) Anmeldetag: 28.06.2010
(51) Int. Cl.: B60S 1/08

(54) **Scheibenwischer-Intervallschaltung**

(30) Priorität: 26.06.2009 DE 102009027235
(71) Anmelder: Kliem, Thomas, 78628 Rottweil (DE)
(72) Erfinder: Kliem, Thomas, 78628 Rottweil (DE)
(74) Vertreter: Gustorf, Gerhard

(57) **Zusammenfassung**

Die Intervallschaltung dient für Kraftfahrzeuge aller Art mit einem elektrischen Wischermotor (M1), der an eine Intervall-Steuerschaltung mit einem Parkkontakt (S1) angeschlossen ist. Die Steuerschaltung besteht aus einem elektronischen Intervallrelais (WWI) mit einem Halbleiterausgang (T), welcher im Normalbetrieb während einer vollen Motorumdrehung bis zum Erreichen des Parkkontaktes (S1) eingeschaltet bleibt.

## Beschreibung

Die Erfindung betrifft eine Scheibenwischer-Intervallschaltung für Kraftfahrzeuge nach dem Oberbegriff des Patentanspruchs 1. Sie kann nicht nur bei PKW und LKW eingesetzt werden, sondern auch bei Baumaschinen, Baggern, Gabelstaplern o. dgl.

Derartige Intervallschaltungen werden in Kraftfahrzeugen eingesetzt, um die Scheibenwischer nicht nur kontinuierlich, sondern auch in Intervallen antreiben zu können. Bei modernen Intervallschaltungen kann die Intervallzeit verändert werden, um die Wischzyklen dem Regen anzupassen. Hierzu bekommt der elektrische Wischermotor von der Intervallschaltung einen Impuls, der so lange andauert, bis der Motor von seinem Parkkontakt heruntergefahren ist. Die Motorwelle führt dann solange Umdrehungen aus, bis der Parkkontakt wieder erreicht ist.

Wenn der Scheibenwischer blockiert ist, insbesondere in der kalten Jahreszeit, in der die Wischerblätter häufig an der Scheibe anfrieren, bleibt der Wischermotor stehen, da er nicht von seinem Parkkontakt herunterfahren kann. Wenn dabei der Impuls der Intervallschaltung abfällt, speist die Wicklung des Motors die gesamte elektromagnetische Energie in das System zurück, so dass dort große Ströme bei hohen Spannungen fließen. Diese Induktionsspitzen können die Intervallschaltung beschädigen oder sogar zerstören, etwa durch Verschweißen der Relaiskontakte oder durch Ausfall der Elektronik.

Bisherige Bemühungen, dieser Probleme Herr zu werden, blieben ohne durchschlagenden Erfolg. Auch war es nicht möglich, alle üblichen und in der Praxis verwendeten Bauformen von Intervallschaltungen durch Filterbausteine zu schützen, die parallel zu den Relaiskontakten angebracht wurden; selbst Relaiskontakte von etwa 10A verschweißten bei einem Motorstrom im Normalbetrieb von 2 bis 3 A trotzdem nach kurzer Zeit.

Der Erfindung liegt die Aufgabe zugrunde, eine Intervallschaltung für Scheibenwischer zur Verfügung zu stellen, bei der die aufgezeigten Probleme beim Blockieren der Scheibenwischer in konstruktiv einfacher Weise gelöst sind.

Die Lösung dieser Aufgabe ergibt sich aus den Merkmalen des Patentanspruchs 1, gemäß dem anstelle der bisher üblichen mechanischen Relais ein elektronisches Relais für die Intervallsteuerung zum Einsatz kommt.

Vorteilhafte Weiterbildungen sind Gegenstand der Unteransprüche.

Die Erfindung wird nachstehend an einem Ausführungsbeispiel erläutert, das in der Zeichnung dargestellt ist. Es zeigen:
Figur 1 ein mögliches Schaltungsschema einer gemäß der Erfindung vorgesehenen Intervallschaltung mit elektronischem Relais,
Figur 2 die Darstellung eines herkömmlichen Systems einer Wisch-Wasch-Intervallschaltung für Scheibenwischer,
Figur 3 das Schaltbild der in Figur 2 angegebenen Intervallschaltung mit elektromagnetischem Relais und
Figur 4 ein Blockschaltbild des Standes der Technik, bei dem die Schaltung der Figur 3 verwendet ist.

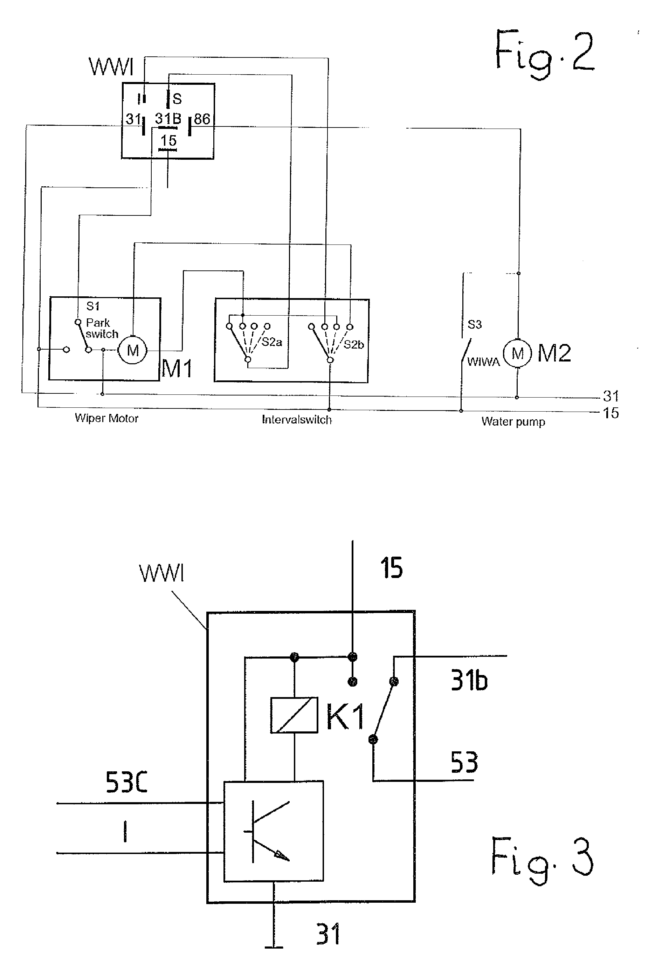

Die Figuren 2, 3 und 4 zeigen ein herkömmliches System einer Wisch-Wasch-Intervallschaltung für Scheibenwischer, die über die Klemmen 15 und 31 an eine Fahrzeugbatterie angeschlossen ist. Dieses übliche System hat einen Wischermotor M1 und üblicherweise auch einen Motor M2 für eine Scheibenwaschanlage. Der Motor M1 dient zum Antrieb der Scheibenwischer, während der Motor M2 die Wasserpumpe für die den Scheibenwischern zugeordneten Sprühdüsen antreibt.

Zur Steuerung des Systems dient das mit WWI bezeichnete, elektromagnetische Relais, das in Figur 3 mit seinem Schaltbild näher dargestellt ist und aufgrund seiner Kompatibilität nach außen ohne Änderungen in das Umfeld gemäß Figur 2 integriert werden kann. Hier sind die Eingangskontakte 15 und 31 der Intervallschaltung WWI eingezeichnet, die mit der Spannungsquelle verbunden sind.

Wie eingangs bereits erwähnt, erhält bei diesem bekannten System der Motor M1 von der Intervallschaltung WWI einen kurzen Impuls durch das Relais K1, der so lange andauert, beispielsweise 0,5 bis 1 sec., bis der Motor M1 von seinem Parkkontakt S1 (vgl. Figur 2) heruntergefahren ist. Der Motor M1 läuft dann, bis die Parkposition wieder erreicht ist.

Wenn die Scheibenwischer blockiert sind, beispielsweise aufgrund von Gestänge-Getriebe-Problemen oder durch Anfrieren an der Fahrzeugscheibe, kann der Wischermotor M1 nicht von seinem Parkkontakt S1 herunterfahren und bleibt stehen. Das führt zu den eingangs erläuterten Problemen, die zur Folge haben, dass die Wicklung des Motors M1 die gesamte elektromagnetische Energie, die er vorher über den Startimpuls erhalten hat, in das System zurückspeist. Die dadurch verursachten Induktionsspitzen beschädigen das Intervallrelais K1 und damit die gesamte Intervallschaltung WWI, die damit ausfällt.

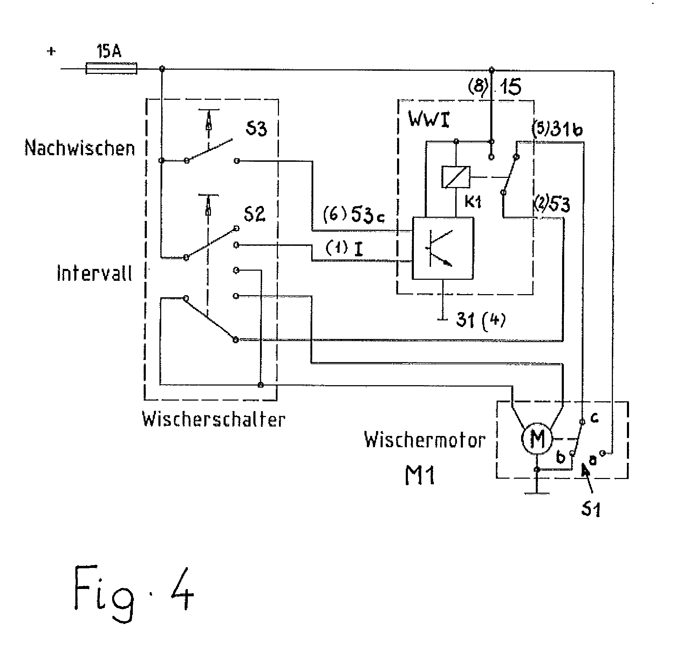

In Figur 4 ist das Zusammenspiel des Wechslers WWI, des Intervallschalters und des Parkkontaktschalters im Wischermotor M1 zu erkennen. Wenn der Intervallschalter betätigt wird, so schließt der Wechslerkontakt von K1 in WWI von 15 nach 53. Der Strom fließt nun über 53/15 über den Intervallschalter in den Wischermotor M1. Wenn die Impulszeit abgelaufen ist, - gilt auch für eine Umdrehung, bis der Parkkontakt erneut erreicht ist, - dann öffnet der Kontakt K1. Nun ist es entscheidend, ob der Wischermotor M1 während der Impulszeit von seiner Parkposition herunterfahren konnte oder nicht. Wenn der Motor von der Parkposition herunterfahren konnte, so wird der Wischermotor über den Parkkontakt (S 1 a/S 1 c) solange mit Energie versorgt, bis die Parkposition erneut erreicht wird und S1a/S1c öffnet.

Durch das Umschalten bzw. das Zusammenspiel des WWI-Wechslers von K1 und des Parkkontaktes wird der Wischermotor M1 aktiv gebremst (S1c/S1b geschlossen), so dass der Scheibenwischer eine definierte Position auf der Windschutzscheibe wiederholt einhalten kann.

Wenn die Parkposition nicht verlassen werden konnte, z. B. wegen Vereisung des Wischerblattes auf der Scheibe, bleibt S1b/S1c geschlossen und die aus dem Startimpuls resultierende Energie wird im Wischermotor über den WWI-Wechsler 53/31b sowie über S1c/S1b nach Masse geleitet. Dabei entstehen große Induktionsspannungen und Induktionsströme, die die Zerstörung der WWI-Relaiskontakte/Parkkontakte oder sogar der ganzen Baugruppe zur Folge haben.

Dieses Problem wird gemäß der Erfindung mit einem elektronischen Schalter gelöst. Da man bei den Wisch-Wasch-Intervallrelais unter großem Kostendruck steht, ist es wichtig, die Kosten und Anzahl der Halbleiterbauteile so gering wie möglich zu halten, ohne auf die maximale Betriebssicherheit zu verzichten. Die elektrische Lebensdauer eines elektromechanischen Kontaktes wird i. d. R. unter 100.000 Schaltspielen angegeben, während die Lebensdauer eines elektronischen Kontaktes unbegrenzt ist.

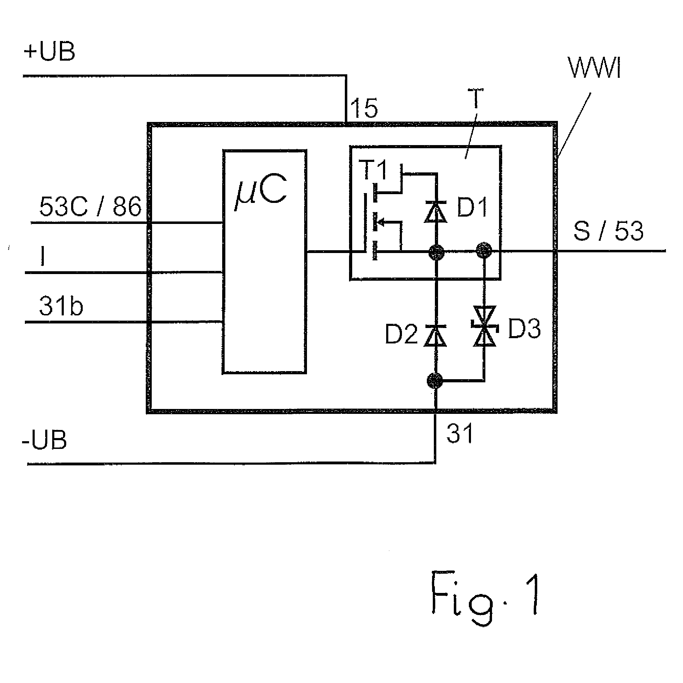

In Figur 1 ist eine Lösungsmöglichkeit dargestellt. Sie zeigt eine erfindungsgemäß ausgebildete Intervallschaltung WWI, die gegen WWI der Figuren 3 und 4 ausgetauscht werden kann und nicht als elektromagnetisches Relais ausgebildet ist, sondern als elektronisches Relais mit einem Halbleiterausgang T. Kernstück dieses Halbleiterausgangs T ist ein Transistor T1, der als ein normaler FET oder ähnliches Bauteil ausgebildet sein kann. Vorzugsweise ist er hier als Treibertransistor (High-Side-Treiber HSD) ausgebildet. Mit diesem ist eine Freilaufdiode D1 integriert, die an Drain oder Source des Transistors T1 angeschlossen ist.

Ein HSD hat den Vorteil, dass einige der nachstehenden Funktionen bereits integriert sind, z.B. Überlastschutz und Kurzschlußschutz. Außerdem besitzt ein HSD einen Statusausgang, über den der Strom gemessen werden kann, um einen Überstrom zu detektieren.

Die Freilaufdiode D1 ist in Reihe mit einer Schutzdiode D2 verbunden, welche an die Klemme 31 mit der Anode des negativen Pols -UB angeschlossen ist. Parallel zu der Schutzdiode D2 kann ein Überlastschutzelement geschaltet sein, das als Suppressordiode D3, als Varistor oder als ein funktionsgleiches Bauteil ausgebildet sein kann.

Eine in der Intervallschaltung WWI integrierte Steuerschaltung µC, z. B. Mikrocontroller oder Mikroprozessor, Chip, diskrete Schaltung - auch eine analoge Lösung wäre denkbar -, schaltet die Steuerelektrode (Gate G) von T1 ein oder aus. Zu der Steuerschaltung µC führt ein Intervalleingang I; der andere Eingang ist der über den Parkkontakt S1 zu Masse führende Anschluss 31b. Eine Anschlussklemme 53C/86 dient für den Motor M2 einer Wischwasserpumpe.

Die Freilaufdiode D1, die mit dem FET T1 integriert ist, dient dazu, Überspannungen über den Anschluss 15 an das Bordnetz abzuleiten. Die Schutzdiode D2 ist parallel zu dem Motor M1 geschaltet und hat die Aufgabe, Induktionsspannungen und Induktionsströme mit umgekehrten Vorzeichen kurzzuschließen.

Da der Wischermotor M1 gemäß der Erfindung nicht mehr über mechanische Relais-Wechsler-Kontakte angesteuert wird, entfallen bei der Beschaltung gemäß Figur 1 die mechanischen Elemente des Öffnerkontakts, weshalb die Ansteuerung in anderer Weise konzipiert ist. Bei dem elektronischen Intervallrelais WWI gemäß Figur 1 wird der Parkkontakt S1 über einen Eingang I gestartet und über den Eingang 31b von der Steuerschaltung µC überwacht. Wenn ein Impuls an den Wischermotor M1 gegeben wird, kann das elektronische Relais WWI überprüfen, ob sich der Motor von dem Parkkontakt S1 gelöst hat oder nicht. Im Unterschied zur herkömmlichen Intervallschaltung mit elektromagnetischem Relais wird im Normalbetrieb der Halbleiterausgang T permanent angetrieben, d.h. der Transistor T1 bleibt so lange eingeschaltet, bis der Wischermotor M1 erneut auf seinen Parkkontakt S 1 aufläuft.

Über den Eingang 86 wird der Motor M2 für die Wischwasserpumpe eingeschaltet. Über diesen Eingang 86 erhält die Steuerelektronik µC die Information, dass die Sprühdüsen betätigt wurden. Das Intervallrelais WWI führt dazu einen Wisch-Wasch-Zyklus sowie nach etwa 4 bis 6 Sekunden einen Nachwischzyklus durch.

Wenn nun die Scheibenwischer blockiert sind, wird über eine Strommessung der Überlaststrom gemessen und der Ausgang nach einer bestimmten Zeit (x) abgeschaltet. Da es verschiedene Wischermotoren gibt und keine allgemeingültige Überstromschwelle definiert werden kann, ist es in Weiterbildung der Erfindung möglich, zusätzlich eine zeitliche Abschaltung t (y) zu integrieren, um das Bordnetz nicht zusätzlich zu belasten und eine Überhitzung (Brandgefahr) des Wischermotors zu vermeiden.

Die Diode D2 dient dazu, die beim Abschalten des Motors M1 entstehende Energie abzuleiten, um dabei den Motor zu bremsen. Dieser muss immer aktiv gebremst werden, damit die Scheibenwischer immer in ihre Ruheposition zurückkehren. Das Problem der Energierückspeisung stellt sich immer dann ein, wenn der Kontakt S2, S1 oder der Wechslerkontakt K1 abgeschaltet wird.

Zusammenfassend ist festzuhalten, dass der Feldeffekttransistor T1 beim Einschalten einen Schließkontakt simuliert, während zum Ausschalten die Dioden D1 und D2 dienen, welche das aufgebaute Magnetfeld abbauen und eine Zerstörung der Halbleiterbauteile verhindern. Durch die Beschaltung der Dioden D2 und D3 ist der Transistor T1 ausreichend geschützt, so dass ihn Induktionsspitzen unabhängig von Polung oder Spannungshöhe nicht beeinträchtigen können. Die Energie, die beim Blockieren im Wisch-Wasch-Intervallsteuergerät abgebaut werden muss, fließt über die Bauteile D1, D2 und D3. D2 fungiert hier als Freilaufdiode; D1 leitet Überspannungen, die über 53 herein kommen können, an die Versorgungsleitung. D3 ist hier eine bipolare Suppressordiode, die die Spannung in beiden Polrichtungen begrenzt.

D1, D2 und D3 können auch durch vergleichbare Bauteile mit gleicher oder ähnlicher Funktion ersetzt werden, z. B. Transistor, FET, Varistor etc.

Die gemäß der Erfindung vorgesehene elektronische Lösung erlaubt es, die Intervallschaltung WWI in Baugruppen zu vergießen, die damit gegen Witterungseinflüsse geschützt sind. Sie kann entsprechend den Anforderungen mit anderen Anschlüssen als in Figur 1 dargestellt in einer geeigneten Gehäuseausführung untergebracht oder Bestandteil einer Zentralelektronik sein.

Die mit der Erfindung erzielten Vorteile sind
- wesentliche Erhöhung der Lebensdauer,
- maßgebliche Erhöhung der Sicherheit bei verklemmtem Motor (Überhitzung, Brandgefahr),
- Überspannungsschutz, Vernichtung der Energierückspeisung des Motors, gleichzeitige "Entstörung" der Betriebspannung (Induktionsspitzen),
- möglicher Sanftanlauf des Wischermotors, um bei großen Windschutzscheiben den ruckartigen Anlauf und die dadurch entstehenden Stromspitzen sowie die mechanische Belastung (z. B. Motorlager, Gestänge) gering zu halten.

## Patentansprüche

1. Scheibenwischer-Intervallschaltung für Kraftfahrzeuge mit einem elektrischen Wischermotor, der an eine Intervall-Steuerschaltung mit einem Parkkontakt angeschlossen ist, **dadurch gekennzeichnet, dass** die Steuerschaltung aus einem elektronischen Intervallrelais (WWI) mit einem Halbleiterausgang (T) besteht, welcher im Normalbetrieb während einer vollen Motorumdrehung bis zum Erreichen des Parkkontaktes (S1) eingeschaltet bleibt.

2. Intervallschaltung nach Anspruch 1, **dadurch gekennzeichnet, dass** der Halbleiterausgang (T) einen Transistor (T1) umfasst.

3. Intervallschaltung nach Anspruch 2, **dadurch gekennzeichnet, dass** der Transistor (T1) ein High-Side-Treiber ist.

4. Intervallschaltung nach Anspruch 3, **dadurch gekennzeichnet, dass** in dem Halbleiterausgang (T) eine Freilaufdiode (D1) integriert ist.

5. Intervallschaltung nach Anspruch 4, **dadurch gekennzeichnet, dass** Drain oder Source des Transistors (T1) über die Freilaufdiode (D1) und eine damit in Reihe verbundene Schutzdiode (D2) an Masse (31) angeschlossen ist.

6. Intervallschaltung nach Anspruch 5, **dadurch gekennzeichnet, dass** parallel zur Schutzdiode (D2) ein Überlastschutzelement geschaltet ist.

7. Intervallschaltung nach Anspruch 6, **dadurch gekennzeichnet, dass** das Überlastschutzelement aus einer Suppressordiode (D3), einem Varistor oder einem funktionsgleichen Bauteil besteht.

8. Intervallschaltung nach einem der Ansprüche 2 bis 7, **dadurch gekennzeichnet, dass** die Steuerelektrode (Gate G) des Transistors (T1) an eine Steuerschaltung (µC) angeschlossen ist, die einen Intervalleingang (I), einen über den Parkkontakt (S1) zu Masse führenden Anschluss (31b) und eine Anschlussklemme (53C/86) für den Motor (M2) einer Wischwasserpumpe hat.
